# EUROPÄISCHE PATENTSCHRIFT

(11) **EP 1 402 610 B1**
(45) Veröffentlichungstag und Bekanntmachung des Hinweises auf die Patenterteilung: **10.04.2013**
(21) Anmeldenummer: 02754759.5
(22) Anmeldetag: 26.06.2002
(51) Int. Cl.: A47B 9/00, A47C 20/04, H02H 3/12

(54) **ELEKTROMOTORISCHER STELLTRIEB**
ELECTRIC MOTOR-DRIVEN ADJUSTMENT DRIVE
MECANISME DE REGLAGE A MOTEUR ELECTRIQUE

(30) Priorität: 30.06.2001 DE 20110841 U
(43) Veröffentlichungstag der Anmeldung: 31.03.2004
(73) Patentinhaber: DewertOkin GmbH, 32278 Kirchlengern (DE)
(72) Erfinder: CTVRTNICEK, Martin, 32257 Bünde (DE); BOKÄMPER, Ralf, 32312 Lübbecke (DE)
(74) Vertreter: Specht, Peter
(86) Internationale Anmeldenummer: PCT/EP2002/007068
(87) Internationale Veröffentlichungsnummer: WO 2003/005526

(56) Entgegenhaltungen:
- EP-A- 0 651 492
- EP-A- 0 887 904
- DE-C1- 4 400 657
- DE-U- 9 116 509
- DE-U1- 9 212 599
- DE-U1- 29 816 022

## Beschreibung

Die Erfindung betrifft einen elektromotorischen Stelltrieb, der mit einer Sicherheitsspannung betreibbar ist, insbesondere Möbelantrieb, der mit einer von einer Handbedienvorrichtung ansteuerbaren Steuereinheit ausgerüstet ist, die durch wenigstens ein Kabel mit einer mit der Netzspannung beaufschlagbaren Spannungsquelle verbunden ist. Die in Rede stehenden elektromotorischen Stelltriebe werden mit Niedervoltmotoren betrieben, deren Versorgungsspannung durch einen am elektrischen Versorgungsnetz angeschlossenen Transformator bereit gestellt wird. Die Motoren können sowohl mit einer Wechselspannung als auch mit einer Gleichspannung betrieben werden. Es ist jedoch aus Sicherheitsgründen notwendig, dass die Spannung deutlich herabgesetzt wird. Bei den Stelltrieben in der Standardbauweise sind die Transformatoren in das Gehäuse des Stelltriebes integriert. Daraus ergibt sich, dass das stromführende Kabel zwischen der Spannungsquelle und dem Transformator unter der Netzspannung steht. Sofern der Stelltrieb als Möbelantrieb verwendet wird, empfinden es viele Benutzer als unangenehm, wenn sich in dem Möbel, beispielsweise ein Sessel oder ein Bett, elektrische oder elektronische Bauelemente oder Baugruppen befinden, die unter der Netzspannung stehen.

Es ist deshalb auch schon vorgeschlagen worden, den Transformator außerhalb des Gehäuses des Stelltriebes anzuordnen. Dies erfolgt auch in solchen Fällen, wenn der vorhandene Einbauraum zu klein ist, um den Stelltrieb aufzunehmen, da durch die Auslagerung des Transformators die Abmessungen des Stelltriebes geringer werden. Derartig ausgelagerte Transformatoren werden auch als Beistelltransformatoren bezeichnet. Bis zu einer bestimmten Leistung kann der Transformator auch als ein Steckernetzteil ausgebildet sein, so dass er sich in unmittelbarer Nähe einer Steckdose befindet. Darüber hinaus ist es bei dieser Ausführung nachteilig, dass der Transformator ständig unter der Netzspannung steht. Die Leerlaufverluste werden in Wärme umgesetzt, wodurch auch noch zusätzliche Kosten entstehen. Es ist deshalb schon vorgeschlagen worden, dass der Transformator während der unter Umständen sehr langen Ruhezeit mittels einer Netzfreischaltung von der Spannungsquelle getrennt wird. Nachteilig dabei ist aber, dass zur Steuerung dieser Netzfreischaltung ein Spezialkabel erforderlich wird, welches so ausgelegt sein muß, dass es mit der Netzspannung als auch mit der Steuerspannung beaufschlagt werden kann. Eine weitere Möglichkeit wäre, zwei verschiedene Kabel zu verlegen, wodurch eine aufwendige Isolierung erforderlich wird, wodurch die Kosten noch zusätzlich erhöht werden.

Die Steuereinheit ist üblicherweise entweder in das Gehäuse des Stelltriebes integriert oder in einem Gehäuse angeordnet, welches mit dem Gehäuse des Stelltriebes verbunden ist. Die Handbedienvorrichtung ist üblicherweise ein mehrere Drucktasten aufweisender Handschalter, dessen Signale über ein Kabel oder auch drahtlos zur Steuereinheit übertragen werden.

Das Dokument DE 91 16 509 U1 beschreibt eine Anordnung zur Netzfreischaltung von Steuereinrichtungen. Die Anordnung weist ein Relais mit mindestens einem Relaisschalter, der sich im nichterregten Zustand in AUS-Stellung befindet und der in der netzseitigen Stromzuführung liegt, und eine parallel zur netzgebundenen Spannungsquelle liegende Hilfsspannungsquelle auf, die über einen Schalter mit dem Steuereingang des Relais verbunden ist.

Dokument DE 4400657 erwähnt einen Steckeradepter welcher eine Netzfreischaltung enthält, nicht jedoch die Stromversorgung fürden Möbelantrieb.

Der Erfindung liegt die Aufgabe zugrunde, einen elektromotorischen Stelltrieb der eingangs näher beschriebenen Art so zu gestalten, dass bei Stillstand des Stelltriebes die elektrische Trennung zwischen der Spannungsquelle und dem Transformator möglich ist, ohne dass Spezialkabel notwendig werden. Außerdem soll der Stelltrieb so ausgelegt sein, dass beispielsweise der mit dem Stelltrieb ausgestattete Gegenstand keine Kabel oder Leitungen enthält, die unter der Netzspannung stehen.

Die gestellte Aufgabe wird gelöst, indem zwischen der Steuereinheit und der Spannungsquelle eine räumlich von der Steuereinheit getrennte Stromversorgungsbaueinheit vorgesehen ist, die eingangsseitig mit der Netzspannung beaufschlagbar ist und ausgangsseitig eine Sicherheitsspannung abgibt, und dass die Stromversorgungsbaueinheit zumindest einen Transformator und eine vorgeschaltete Netztrennungsschaltung beinhaltet.

Durch die erfindungsgemäße Lösung wird nunmehr erreicht, dass nur noch das Kabel zwischen der Spannungsquelle und der Stromversorgungsbaueinheit mit der Netzspannung beaufschlagt werden. Das von der Stromversorgungsbaueinheit zur Steuereinheit führende Kabel kann ein einfaches und somit kostengünstiges Niederspannungskabel sein. Das Kabel zwischen der Spannungsquelle und der Stromversorgungsbaueinheit kann äußerst kurz sein. Außerdem wird dafür dann ein handelsübliches Kabel verwendet. Bei dieser Ausführung entfällt das ansonsten notwendige Spezialkabel. Außerdem wird der in einen Gegenstand, beispielsweise in ein Möbel eingebaute Stelltrieb nur noch mit der Sicherheitsspannung beaufschlagt, so dass eine größtmögliche Sicherheit gegeben ist. Durch die Netztrennungsschaltung ist es möglich, dass bei Nichtgebrauch der Transformator und gegebenenfalls weitere elektrische oder elektronische Bauteile sowie die Kabelverbindung und der Stelltrieb selbst einschließlich der Steuereinheit stromlos ist. Die in Frage kommenden Stelltriebe werden in viele Staaten geliefert. Es ist bekannt, dass nicht nur die Spannungen und Frequenzen unterschiedlich sind, sondern auch die elektrischen Anschlußelemente. Es ist deshalb vorgesehen, dass die Stromversorgungsbaueinheit und das zur Spannungsquelle führende Netzkabel durch Steckverbinder lösbar miteinander verbunden sind, und dass vorzugsweise das Netzkabel mit einem Stecker und das Gehäuse der Stromversorgungsbaueinheit eine Steckdose oder eine Buchse aufweist. Es ist dann möglich, das Netzkabel mit den verschiedenen nationalen Steckern leicht auszutauschen. Dadurch wird die Lagerhaltung für die Stromversorgungsteile reduziert, wodurch auch die Kosten noch gesenkt werden.

Besonders vorteilhaft ist, wenn der Transformator ein elektronischer Transformator ist, da dadurch die Möglichkeit besteht, dass für die verschiedenen, unterschiedlichen nationalen Eingangsspannungen ein entsprechendes Netzteil verwendet werden kann, welches einen relativ großen Eingangsspannungsbereich aufweist. Dadurch wird die Lagerhaltung nochmals reduziert. Zweckmäßigerweise werden die einzelnen Funktionseinheiten in einem modularen Aufbau hergestellt, so dass durch Hinzufügen einzelner Module eine Nachrüstbarkeit gegeben ist. Diese Module können dann in einfachster Weise durch angeformte Verbindungselemente zu einem Block zusammengesetzt werden, ohne das mechanische Verbindungselemente notwendig sind. Der modulare Aufbau bietet darüber hinaus den Vorteil, dass die Stromversorgungsbaueinheit nachträglich geändert oder auch erweitert werden kann. Die Netztrennungsschaltung besteht in vorteilhafter Weise aus mindestens einem, vorzugsweise jedoch aus zwei Schaltelementen. Dadurch ist in einfachster Weise die Trennung von der Netzspannung möglich. In besonders vorteilhafter Weise ist die Netztrennungsschaltung zu ihrer Betätigung über ein Kabel mit der Handbedienvorrichtung verbunden. Da die Handbedienvorrichtung im Griffbereich einer Person liegt, ist die Betätigung äußerst einfach und ergonomisch günstig durchführbar. Die in Frage kommenden elektromotorischen Stelltriebe können sowohl mit Gleichstrom als auch mit Wechselstrommotoren ausgerüstet sein. Sofern Gleichstrommotoren verwendet werden, ist vorgesehen, dass dem Transformator ein Gleichrichter und ein Siebelement nachgeschaltet ist. Die Gleichrichtung des Wechselstromes erfolgt dann ebenfalls in der Stromversorgungsbaueinheit. Zweckmäßigerweise ist dem Transformator noch eine Notspannungsquelle nachgeschaltet. Dies kann beispielsweise eine Batterie oder ein Akkumulator sein. Da derartige Spannungsquellen gelegentlich ausgetauscht werden müssen, ist dieses Wechseln äußerst einfach, da die Stromversorgungsbaueinheit leicht zugänglich ist. Für den Fall, dass zwischen der Stromversorgungsbaueinheit und der Steuereinheit mehrere Kabel notwendig sind, ist vorgesehen, dass die Stromversorgungsbaueinheit ausgangsseitig ein Kabelzusammenführelement aufweist. Dieses könnte beispielsweise wiederum mit einer Steckdose versehen sein, so dass ein einziges Kabel mit einer entsprechenden Anzahl von Adern zur Verbindung mit der Steuereinheit verwendet werden kann. Das Kabel hätte dann einen entsprechend ausgelegten Stecker. Die einzelnen Bausteine des modular aufgebauten Blockes richten sich nach der vom Stelltrieb zu erfüllenden Funktion und ggf. auch einzuhaltenden Sicherheitsbestimmungen.

Anhand der beiliegenden Zeichnungen wird die Erfindung noch näher erläutert. Es zeigen:
- Figur 1: ein Ausführungsbeispiel eines mit einer Stromversorgungsbaueinheit ausgerüsteten elektromotorischen Stelltriebes,
- Figur 2: eine mögliche Ausführungsform der Stromversorgungsbaueinheit und
- Figur 3: eine Stromversorgungsbaueinheit in einer modularen Bauweise,

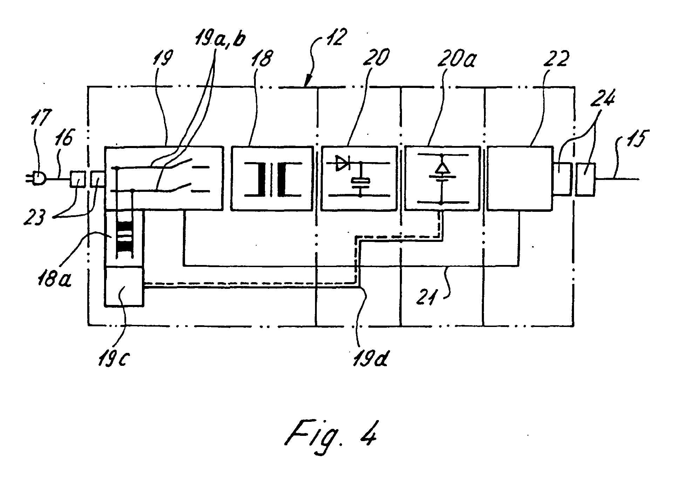

- Figur 4: eine Stromversorungsbaueinheit gemäß der Fig. 3 jedoch mit einer Spannungsversorgung für die Netztrennschaltung.

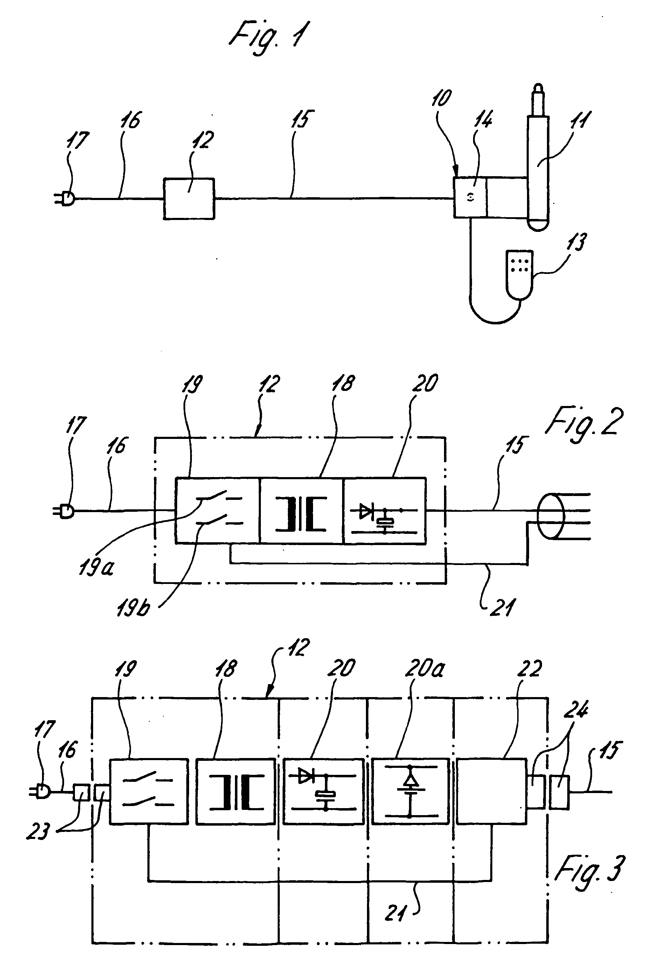

Der in der Figur 1 dargestellte elektromotorische Stelltrieb 10 besteht im dargestellten Ausführungsbeispiel aus einem Linearantrieb 11, der ein Gehäuse aufweist, in dem alle Funktionsteile einschließlich eines Antriebsmotors montiert sind. Der elektromotorische Stelltrieb 10 ist außerdem mit einer Stromversorgungsbaueinheit 12 und einer Handbedienvorrichtung 13 in Form eines Handschalters ausgestattet. An das Gehäuse des Linearantriebes 11 ist auch noch eine Steuereinheit 14 angesetzt. Wie die Figur 1 verdeutlicht, liegt die Stromversorgungsbaueinheit 12 derart im Abstand zum Linearantrieb 11, dass sie auch außerhalb eines Gegenstandes steht, in den der Linearantrieb 11 eingebaut ist. Die Verbindung zwischen der Steuereinheit 14 und der Stromversorgungsbaueinheit 12 erfolgt durch ein vorzugsweise mehraderiges Kabel 15. Die Stromversorgungsbaueinheit 12 sollte möglichst nah an einer Spannungsquelle liegen. Die Verbindung zwischen der Spannungsquelle und der Stromversorgungsbaueinheit 12 erfolgt durch ein Netzkabel 16, welches mit einem Stecker 17 ausgestattet ist.

Bei der Ausführung nach der Figur 2 besteht die Stromversorgungseinheit aus drei Bausteinen nämlich einem Transformator 18, der in bevorzugter Ausführung ein elektronischer Transformator ist, einer dem Transformator 18 vorgeschalteten Netztrennungsschaltung 19 sowie einer Gleichrichterschaltung 20 die auch noch ein Siebelement enthält. Die Netztrennungsschaltung 19 wird im dargestellten Ausführungsbeispiel über ein Steuerkabel 21 angesteuert, welches in bevorzugter Ausführung mit der Handbedienvorrichtung 13 verbunden ist. Die Netztrennungsschaltung 19 beinhaltet zwei Schalter 19a und 19b die parallel geschaltet sind. In der Figur 2 sind die Schalter 19a, 19b geöffnet, dies entspricht dem Ruhezustand des Linearantriebes 11. Es ergibt sich aus dem Schaltbild, dass alle sinngemäß hinter der Netztrennungsschaltung 19 angeordneten, mit Strom beaufschlagbaren Bauteile stromlos sind. Der Transformator 18, die Netztrennungsschaltung 19 und der Gleichrichter 20 können in einem gemeinsamen Gehäuse angeordnet werden.

Die Figur 3 zeigt einen modularen Aufbau der Stromversorgungsbaueinheit 12. Die gleichen Bauelemente sind auch mit gleichen Bezugszeichen versehen. Gegenüber der Ausführung nach der Figur 3 ist diese Ausführung noch mit einer Notstromversorgungseinrichtung 20a, beispielsweise mit einer Batterie oder einem Akkumulator ausgestattet, sowie mit einem Kabelzusammenführelement 22 ausgestattet. Die einzelnen Bauelemente 18 bis 22 können so gestaltet sein, dass sie ohne mechanische Verbindungselemente miteinander verrastet oder verclipst werden können. Die modulare Bauweise soll durch die senkrechten, strichpunktierten Linien angedeutet werden. Die Figur 3 zeigt außerdem, dass das Netzkabel 16 durch Steckverbinder 23 beispielsweise durch einen Stecker und eine Steckdose mit der Netztrennungseinrichtung 19 verbunden sein kann. Gleiches gilt auch für das Kabel 15 welches über Steckverbinder 24 mit dem Kabelzusammenführelement 22 verbunden ist.

Die Stromversorgungsbaueinheit 12 sollte zumindest die Netztrennungsschaltung 19 und den Transformator 18 enthalten. Die Ausführung und die Anzahl der restlichen Bauelemente richtet sich nach der vom Antrieb 11 zu erfüllenden Funktion. Es ist nicht notwendig, dass ein Linearantrieb 11 verwendet wird. So könnte beispielsweise auch ein Rotationsantrieb verwendet werden sowie ein Doppelantrieb, der mit zwei Antriebsmotoren ausgestattet ist. Die Spannungsversorgung 19c für die Netztrennschaltung 19 erfolgt durch eine Hilfsspannungsquelle, die entweder aus dem Stromversorgungsnetz durch einen Anschluß vor den Kontakten 19a, 19b der Netztrennungsschaltung 19 erfolgt, wobei mittels eines Hilfstransformators 18a die Spannung transformiert wird. Alternativ dazu ist es jedoch auch möglich, dass als Hilfsspannungsquelle eine Batterie oder ein Akkumulator verwendet wird, die bzw. der sich in der Steuereinheit 14 befindet. Dies erfolgt dann über einen Anschluß 19d der Hilfsspannungsquelle 20a. Besonders vorteilhaft. Besonders vorteilhaft wirkt sich dabei der modulare Aufbau und die räumliche Trennung vom Gerät aus, wodurch ein Wechsel der Hilfsspannungsquelle äußerst leicht im Gegensatz zu den bekannten Ausführungen durchführbar ist.

Die Erfindung ist nicht auf das dargestellte Ausführungsbeispiel beschränkt. Wesentlich ist, dass zwischen der Steuereinheit 14 des Antriebes 11 und der Spannungsquelle eine räumlich von der Steuereinheit 14 getrennte Stromversorgungsbaueinheit 12 vorgesehen ist, die eingangsseitig mit der Netzspannung beaufschlagbar ist, und ausgangsseitig die Sicherheitsspannung abgibt.

## Patentansprüche

1. Elektromotorischer Stelltrieb (10), der mit einer Sicherheitsspannung betreibbar ist, insbesondere Möbelantrieb, und der mit einer von einer Handbedienvorrichtung (13) ansteuerbaren Steuereinheit (14) ausgerüstet ist, und die durch wenigstens ein Kabel (15) mit einer durch eine vorgeschaltete Netztrennungsschaltung (19) mit Netzspannung beaufschlagbaren Spannungsquelle verbunden ist, wobei die Netztrennungsschaltung, von der Steuereinheit räumlich getrennt ist, **dadurch gekennzeichnet, dass** zwischen der Steuereinheit (14) des Antriebes (11) und der Spannungsquelle eine räumlich von der Steuereinheit (14) getrennte Stromversorgungsbaueinheit (12) vorgesehen ist, die eingangsseitig mit der Netzspannung beaufschlagbar ist, und ausgangsseitig die Sicherheitsspannung abgibt, und dass die Stromversorgungsbaueinheit (12) zumindest einen Transformator (18), dem ein Gleichrichter (20) und vorzugsweise auch ein Siebelement nachgeschaltet ist, und die vorgeschaltete Netztrennungsschaltung (19) beinhaltet, die zu ihrer Betätigung über ein Steuerkabel (21) mit der Handbedienvorrichtung verbunden ist, und dass der Transformator (18), die Netztrennungsschaltung (19) und der Gleichrichter (20) in einem gemeinsamen Gehäuse angeordnet sind.

2. Elektromotorischer Stelltrieb nach Anspruch 1, **dadurch gekennzeichnet, dass** die Stromversorgungsbaueinheit (12) und das zur Spannungsquelle führende Netzkabel (16) durch Steckverbinder lösbar miteinander verbunden sind, und dass vorzugsweise das Netzkabel mit einem Stecker und das Gehäuse der Stromversorgungsbaueinheit (12) eine Steckdose oder eine Buchse aufweist.

3. Elektromotorischer Stelltrieb nach Anspruch 1 oder 2, **dadurch gekennzeichnet, dass** der Transformator (18) ein elektronischer Transformator ist.

4. Elektromotorischer Stelltrieb nach einem oder mehreren der vorhergehenden Ansprüche 1 bis 3, **dadurch gekennzeichnet, dass** die Netztrennungsschaltung (19) aus mindestens einem, vorzugsweise aus zwei Schaltelementen (19a, 19b) besteht.

5. Elektromotorischer Stelltrieb nach einem oder mehreren der vorhergehenden Ansprüche 1 bis 4, **dadurch gekennzeichnet, dass** dem Transformator (18) eine Notspannungsquelle (20a) nachgeschaltet ist, die vorzugsweise aus einer Batterie oder einem Akkumulator gebildet

6. Elektromotorischer Stelltrieb nach einem oder mehreren der vorhergehenden Ansprüche 1 bis 5, **dadurch gekennzeichnet, dass** die Stromversorgungsbaueinheit (12) ausgangsseitig ein Kabelzusammenfiihrelement (22) aufweist.

7. Elektromotorischer Stelltrieb nach Anspruch 6, **dadurch gekennzeichnet, dass** die Stromversorgungsbaueinheit (12) mit dem zur Steuereinheit (14) führenden Kabel (15) durch Steckverbinder verbunden ist.

8. Elektromotorischer Stelltrieb nach einem oder mehreren der vorhergehenden Ansprüche 1 bis 7, **dadurch gekennzeichnet, dass** die die Stromversorgungseinheit (12) bildenden Bauelemente (18-22) in einem modularen Aufbau vorzugsweise ohne mechanische Verbindungselemente miteinander verbunden sind.

9. Elektromotorischer Stelltrieb nach einem oder mehreren der vorhergehenden Ansprüche 1 bis 8, **dadurch gekennzeichnet, dass** die Spannungsversorgung (19c) der Netztrennschaltung (19) durch eine Hilfsspannungsquelle erfolgt, beispielsweise durch einen Hilfstransformator (18a) der aus dem Stromversorgungsnetz beaufschlagbar ist oder durch eine in der Steuereinheit (14) vorgesehene Batterie oder einen Akkumulator.

10. Elektromotorischer Stelltrieb nach Anspruch 9, **dadurch gekennzeichnet, dass** die Spannungsversorgung (19c) der Netztrennungsschaltung (19) über einen Anschluß (19d) mit der Notspannungsquelle (20) elektrisch verbunden ist.

## Claims

1. Electromotive actuating drive (10) which can be operated at a safety voltage, in particular a furniture drive, and which is equipped with a control unit (14) which can be actuated by a handheld operator control apparatus (13), and the said control unit being connected to a voltage source, which can be supplied with supply system voltage by an upstream supply system disconnection circuit (19), by at least one cable (15), with the supply system disconnection circuit being physically separate from the control unit, **characterized in that** a power supply structural unit (12) which is physically separate from the control unit (14) is provided between the control unit (14) of the drive (11) and the voltage source, it being possible for the supply system voltage to be applied to the input end of the said power supply structural unit and said power supply structural unit outputting the safety voltage at the output end, and **in that** the power supply structural unit (12) contains at least one transformer (18), a rectifier (20) and preferably also a screen element being connected downstream of the said transformer, and the upstream supply system disconnection circuit (19) which, in order to be operated, is connected to the handheld operator control apparatus via a control cable (21), and **in that** the transformer (18), the supply system disconnection circuit (19) and the rectifier (20) are arranged in a common housing.

2. Electromotive actuating drive according to Claim 1, **characterized in that** the power supply structural unit (12) and the supply system cable (16) which leads to the voltage source are connected to one another in a detachable manner by plug connectors, and **in that** the supply system cable preferably has a plug and the housing of the power supply structural unit (12) preferably has a plug receptacle or a socket.

3. Electromotive actuating drive according to Claim 1 or 2, **characterized in that** the transformer (18) is an electronic transformer.

4. Electromotive actuating drive according to one or more of the preceding Claims 1 to 3, **characterized in that** the supply system disconnection circuit (19) comprises at least one, preferably two, switching elements (19a, 19b).

5. Electromotive actuating drive according to one or more of the preceding Claims 1 to 4, **characterized in that** an emergency voltage source (20a) is connected downstream of the transformer (18), the said emergency voltage source preferably being formed by a battery or a rechargeable battery.

6. Electromotive actuating drive according to one or more of the preceding Claims 1 to 5, **characterized in that** the power supply structural unit (12) has a cable-combining element (22) at the output end.

7. Electromotive actuating drive according to Claim 6, **characterized in that** the power supply structural unit (12) is connected to the cable (15), which leads to the control unit (14), by plug connectors.

8. Electromotive actuating drive according to one or more of the preceding Claims 1 to 7, **characterized in that** the components (18-22) which form the power supply unit (12) are connected to one another with a modular design, preferably without mechanical connecting elements.

9. Electromotive actuating drive according to one or more of the preceding Claims 1 to 8, **characterized in that** the voltage supply means (19c) of the supply system disconnection circuit (19) is formed by an auxiliary voltage source, for example by an auxiliary transformer (18a) which can be supplied with power by the power supply system or by a battery or a rechargeable battery which is provided in the control unit (14).

10. Electromotive actuating drive according to Claim 9, **characterized in that** the voltage supply means (19c) of the supply system disconnection circuit (19) is electrically connected to the emergency voltage source (20) by means of a connection (19d).

## Revendications

1. Mécanisme de réglage (10) à moteur électrique qui peut fonctionner avec une tension de sécurité, en particulier un entraînement de meuble et qui est équipé d'une unité de commande (14) pouvant être commandée par un dispositif de commande manuelle (13), et qui est relié par au moins un câble (15) à une source de tension pouvant être alimentée en tension de réseau par un circuit de séparation de réseau prémonté (19), le circuit de séparation de réseau étant séparé de l'unité de commande, **caractérisé en ce qu'**une unité structurelle d'alimentation en courant (12) séparée de l'unité de commande (14) est prévue entre l'unité de commande (14) de l'entraînement (11) et la source de tension, laquelle unité structurelle peut être alimentée côté entrée en tension de réseau, et fournit côté sortie la tension de sécurité et **en ce que** l'unité structurelle d'alimentation en courant (12) contient au moins un transformateur (18), en aval duquel sont montés un redresseur (20) et de préférence aussi un élément de filtre, et le circuit de séparation de réseau (19) monté en amont qui est relié pour son actionnement par un câble de commande (21) au dispositif de commande manuelle, et **en ce que** le transformateur (18), le circuit de séparation de réseau (19) et le redresseur (20) sont disposés dans un boîtier commun.

2. Mécanisme de réglage à moteur électrique selon la revendication 1, **caractérisé en ce que** l'unité structurelle d'alimentation en courant (12) et le câble de réseau (16) menant à la source de tension sont reliés entre eux de manière amovible par des connecteurs, et **en ce que** le câble de réseau présente de préférence une fiche mâle et le boîtier de l'unité structurelle d'alimentation en courant (12) présente une prise femelle ou une douille.

3. Mécanisme de réglage à moteur électrique selon la revendication 1 ou 2, **caractérisé en ce que** le transformateur (18) est un transformateur électronique.

4. Mécanisme de réglage à moteur électrique selon l'une ou plusieurs quelconques des revendications précédentes 1 à 3, **caractérisé en ce que** le circuit de séparation de réseau (19) se compose d'au moins un, de préférence de deux éléments de commutation (19a, 19b).

5. Mécanisme de réglage à moteur électrique selon l'une ou plusieurs quelconques des revendications précédentes 1 à 4, **caractérisé en ce qu'**une source de tension de secours (20a) est montée en aval du transformateur (18), laquelle est constituée de préférence d'une batterie ou d'un accumulateur.

6. Mécanisme de réglage à moteur électrique selon l'une ou plusieurs quelconques des revendications précédentes 1 à 5, **caractérisé en ce que** l'unité structurelle d'alimentation en courant (12) présente côté sortie un élément de jonction de câble (22).

7. Mécanisme de réglage à moteur électrique selon la revendication 6, **caractérisé en ce que** l'unité structurelle d'alimentation en courant (12) est reliée au câble (15) menant à l'unité de commande (14) par des connecteurs.

8. Mécanisme de réglage à moteur électrique selon l'une ou plusieurs quelconques des revendications précédentes 1 à 7, **caractérisé en ce que** les éléments structurels (18-22) formant l'unité d'alimentation en courant (12) sont reliés entre eux dans une structure modulaire de préférence sans élément de liaison mécanique.

9. Mécanisme de réglage à moteur électrique selon l'une ou plusieurs quelconques des revendications précédentes 1 à 8, **caractérisé en ce que** l'alimentation en tension (19c) du circuit de séparation de réseau (19) est assurée par une source de tension auxiliaire, peut être alimentée par exemple par un transformateur auxiliaire (18a) du réseau d'alimentation en courant ou par une batterie prévue dans l'unité de commande (14) ou un accumulateur.

10. Mécanisme de réglage à moteur électrique selon la revendication 9, **caractérisé en ce que** l'alimentation en tension (19c) du circuit de séparation de réseau (19) est reliée électriquement par un raccordement (19d) à la source de tension de secours (20).
